# EUROPEAN PATENT APPLICATION

(11) **EP 4 790 651 A1**
(43) Date of publication of application: **12.08.2026**
(21) Application number: 25156839.0
(22) Date of filing: 10.02.2025
(51) Int. Cl.: G06V 10/143, G06V 20/59

(54) **DRIVER MONITORING SYSTEM FOR A VEHICLE**

(71) Applicant: Elektrobit Automotive GmbH, 91058 Erlangen (DE)
(72) Inventor: Schlipf, Andreas, 91058 Erlangen (DE)
(74) Representative: Aumovio Corporation

(57) **Abstract**

This disclosure relates to a driver monitoring system (2) for a vehicle (1), comprising:
- a camera (3) configured to capture infrared light,
- an infrared illumination unit (4) configured to illuminate a driver, in particular a driver's face, with infrared light, and
- a surface (5) positioned in a light path between the camera (3) and the driver (D), wherein the surface (5)
a) is at least reflective in the infrared spectrum, or
b) comprises a coating (6) with at least one layer (7) that is at least reflective in the infrared spectrum,

wherein the surface (5) is arranged so that the infrared light generated by the infrared illumination unit (4) is reflected from the driver's face to the camera (3) so that the camera (3) captures the driver's face.

## Description

The invention relates to a driver monitoring system for a vehicle. Furthermore, the invention relates to a vehicle comprising such a driver monitoring system.

Driver monitoring systems utilizing infrared detectors, e.g., cameras, are commonly installed in modern vehicles to analyze a driver's face and detect signs of fatigue or distraction. Conventionally, such cameras are mounted on or near the dashboard, often in close proximity to the driver information display or even integrated within the same housing. For instance, in some cars the camera is positioned next to the display. These systems may employ infrared light, which is invisible to the human eye, to capture the driver's facial features. A drawback of existing driver monitoring systems is that the camera must always have an unobstructed line of sight to the driver. This poses challenges in hiding the camera from the driver's view while ensuring reliable operation. In some cases, the camera is highly visible, such as when mounted separately in front of the display. In other configurations, the camera is concealed behind dark areas of the display housing, which may compromise image quality and system efficiency. Additionally, integrating the camera within the display unit can lead to thermal issues, as the camera system may contribute to increased heat load on the display components.

An object of the present disclosure is to provide a driver monitoring system for a vehicle that provides a direct view of the driver while enabling improved concealment of the camera and system related components.

This objective is achieved by a driver monitoring system for a vehicle disclosed herein and a vehicle disclosed herein. Preferred or advantageous embodiments can be inferred from the description and drawings.

According to a first aspect of the invention a driver monitoring system for a vehicle comprises a camera configured to capture infrared light, an infrared illumination unit configured to illuminate a driver, in particular the driver's face, with infrared light, and a surface positioned in a light path between the camera and the driver. The surface is either at least reflective in the infrared spectrum or comprises a coating with at least one layer that is at least reflective in the infrared spectrum. The surface is arranged in such a way that infrared light emitted by the infrared illumination unit is reflected from the driver's face to the camera, allowing the camera to capture the driver's face. By utilizing infrared light, the system remains fully functional even in low-light or night-time conditions, ensuring continuous monitoring of the driver's state.

In one embodiment the surface is part of a separate component which is at least reflective in the infrared spectrum. In another embodiment a coating is applied to the surface, wherein the coating with said reflective layer is at least reflective in the infrared spectrum. In the latter case, the separate component can be non-reflective in the visual spectrum. This allows for greater flexibility in choosing the materials and design of the reflective component or the reflective coating, enabling seamless integration into different vehicle interiors. A coating is a thin layer of material applied to a surface to modify its optical properties. The coating can have one or several layers.

The camera is an infrared camera and is part of a system that analyzes the driver's face to detect fatigue or distraction. The camera is positioned such that it captures the driver's face through the reflection of infrared light from either the reflective component or the coated surface. The surface acts as a mirror for the camera, and any surface within the vehicle either at least being reflective in the infrared spectrum or being coated with an infrared-reflective layer can serve this function. The surface may be flat or have a high radius; a smaller radius results in a wider perceived face in the reflection. The surface is mounted at a predetermined angle relative to the driver and the camera in order to optimize the reflection of the driver's image toward the camera. This configuration ensures that the camera remains invisible to the driver. As a result, vehicle manufacturers can maintain a clean and aesthetically pleasing cockpit design while still incorporating an effective driver monitoring system.

The term "infrared light" refers to "light in the infrared spectrum". Both terms refer to electromagnetic radiation within the infrared (IR) wavelength range, which is approximately 700 nanometers (nm) to 1 millimeter (mm). By limiting the system to this spectral range, interference from visible light sources such as dashboard illumination, or other vehicle lighting is minimized, further enhancing the accuracy of facial recognition.

In a preferred embodiment the at least one layer is non-reflective in the visible spectrum for the human eye. This ensures that the reflective properties do not interfere with the driver's visibility or cause unwanted glare. This is particularly beneficial when the surface is a display screen, as it prevents distracting reflections that could impair readability.

The surface can be made of glass or plastic or any other material on which the at least one layer can be applied. The surface, in case it has infrared light reflecting properties, should be specifically adapted for high reflectivity in the infrared spectrum. Additionally, the coating can be designed to withstand environmental factors such as temperature fluctuations and UV exposure, ensuring long-term stability and performance.

Preferably the infrared illumination unit is arranged at a spatial distance from the camera. In other words, the infrared illumination unit can be positioned independently from the camera, allowing flexibility in placement within the vehicle. The camera and the infrared illumination unit can be distributed across different mounting locations in the vehicle to enable flexible integration into various vehicle designs. This independent arrangement also prevents unwanted reflections from interfering with the captured image and allows optimized illumination of the driver's face regardless of seating position or height. Alternatively, the infrared illumination unit and the camera can be arranged next to each other. In addition, the infrared illumination unit and the camera can form a single unit.

The camera can be connected to an evaluation unit that processes the captured images to monitor the driver's attention. The evaluation unit can be a separate unit of the system. Alternatively, the evaluation unit can be part of a vehicle control system. In the former case, the evaluation unit can be connected to the vehicle control system in a signal-transmitting manner.

The camera may include a heating element to prevent condensation or fogging of the lens. This feature is particularly advantageous in cold or humid environments, ensuring continuous functionality even under challenging weather conditions.

The coating of the surface, comprising at least one layer being at least reflective in the infrared spectrum, may include at least one anti-reflection layer. An anti-reflection coating increases reflectivity for the camera while improving readability for the driver. The performance of the anti-reflection coating improves with additional layers. The anti-reflection layer can be specifically modified to have higher reflectance in the infrared range. The anti-reflection layer may be applied to a front glass of displays according to customer specifications. An additional infrared-reflective layer may also be incorporated to enhance performance. In one embodiment several anti-reflection layers can be applied on the surface or an existing coating to form an anti-reflection coating to reduce unwanted reflections in a specific wavelength range while optimizing reflection properties. For example, the coating consists of four layers: a first layer of niobium pentoxide (Nb₂O₅) applied to the surface, which can be made of a glass substrate, followed by a second layer of silicon dioxide (SiO₂), a third layer of Nb₂O₅, and a fourth layer of SiO₂. This layer structure is designed to enhance reflectivity in the infrared spectrum while minimizing reflections in the visible spectrum, ensuring efficient infrared light reflection for the camera while maintaining clear visibility for the driver.

In another embodiment, the coating includes at least one anti-glare layer. In one embodiment, one anti-glare layer can be applied to a surface or an existing coating to form an anti-glare coating. These layers reduce glare by minimizing specular reflections and enhancing light diffusion. The anti-glare layer or coating can be applied using different techniques, such as spraying or etching. In the spraying method, small particles are deposited onto the surface, creating surface scattering or volumetric scattering, which diffuses incoming light. In the etching process, material is selectively removed from the surface, modifying its microstructure to achieve a similar glare-reducing effect.

The layer reflective in the infrared spectrum may have either a matt or glossy finish, with reflection properties optimized according to the surface finish. In this context, "matt" refers to a surface finish that diffuses light, reducing glare and unwanted reflections. "Glossy" describes a smooth, highly reflective surface that enhances infrared reflection for the camera but may require anti-glare treatment to prevent visible reflections. Anti-glare coatings can be used advantageously in displays. The choice between a matt or glossy finish depends on the specific integration requirements and user preferences, ensuring high-quality image capture.

Additional layers, such as an anti-glare layer on top of the infrared-reflective layer, can be used to improve visual comfort, though they are not essential for the core function of the system.

To protect the camera, it is preferably covered by a cover that allows at least infrared light to pass through. This cover is preferably made of glass or plastic that is transparent only in the infrared spectrum. This ensures that visible light interference is minimized while maintaining the system's ability to function effectively.

According to a second aspect of the invention, a vehicle comprises the driver monitoring system according to the first aspect of the invention. The vehicle can be a passenger car, a commercial vehicle, a truck, a motorbike, an aircraft or the like. The invention is particularly beneficial in automated or semi-automated driving systems where continuous driver monitoring is required for safety reasons.

Preferably the camera is positioned outside the driver's line of sight during vehicle use. In one embodiment the camera is arranged within a housing of a steering wheel of the vehicle, in the vehicle's roof lining, or within a dashboard facing e.g., to an opaque frame section of the windshield. In each case, the camera is directed towards the reflective surface in order to capture the driver's face through the reflection. These configurations allow for flexible integration while keeping the camera concealed from the driver's view. Other placements of the camera within the vehicle are also possible depending on a display integration. By strategically placing the camera, interference with other vehicle functions, such as head-up displays or rearview mirror systems, can be avoided.

A preferred embodiment of the vehicle includes a display, wherein a front surface of the display is coated with the at least one infrared-reflective layer. The camera is invisible to the driver while allowing the use of standard display panels such as LCD and OLED. Additionally, the camera's heat does not affect the display, and the component experiences reduced heat absorption as it reflects external heat, for example from sunlight. This configuration enhances system efficiency while maintaining optimal performance over extended periods of vehicle operation.

Alternatively, the windshield may serve as the reflective surface by applying the infrared-reflective coating to either the inside or outside surface of the windshield. If applied to the outside, the windshield allows at least infrared light to pass through.

Furthermore, the infrared illumination unit can be integrated into the housing of the steering wheel or a dashboard of the vehicle. The illumination unit does not need to be positioned close to the camera; instead, it can be arranged flexibly within the cockpit, such as in the display, steering wheel, or other interior components.

Preferably the windscreen has means for protecting the camera from at least indirect exposure to sunlight, in particular when the camera is oriented in substantially vertical direction. This protection can be achieved by integrating an infrared-pass filter or a shading element within the opaque frame section of the windscreen, preventing excessive sunlight from interfering with the infrared image capture. By reducing unwanted infrared radiation from external light sources, image quality is improved, ensuring more reliable driver monitoring. Additionally, this design minimizes the risk of sensor overheating, thereby enhancing the overall durability and performance of the camera. A further advantage is that image contrast remains stable, even under varying daylight conditions, allowing for more precise detection of facial features.

Compared to conventional driver monitoring systems, the present invention provides several key advantages. The camera can be hidden more effectively, as it does not require a direct line of sight to the driver. The display size is not restricted by the need to accommodate a camera, allowing for greater design flexibility. The separation of the camera and illumination unit further reduces thermal impact on the display. The system requires less power compared to a camera integrated or behind the display solution, as display transmission loss is minimized. This system can be beneficial not only for passenger vehicles but also in public transportation systems where driver monitoring is required. This system can also be beneficial in other areas, where a person, in particular a person's face or facial features of the person, needs to be captured and analyzed.

Further details are explained with reference to further drawings below. These show in:
- Fig. 1: a longitudinal sectional view of a cockpit of a vehicle to illustrate the structure of a driver monitoring system according to the invention according to a first embodiment,
- Fig. 2: a longitudinal sectional view of the cockpit to illustrate the structure of the driver monitoring system according to the invention according to a second embodiment,
- Fig. 3: a longitudinal sectional view of the cockpit to illustrate the structure of the driver monitoring system according to the invention according to a third embodiment, and
- Fig. 4: a longitudinal sectional view of the cockpit to illustrate the structure of the driver monitoring system according to the invention according to a fourth embodiment.

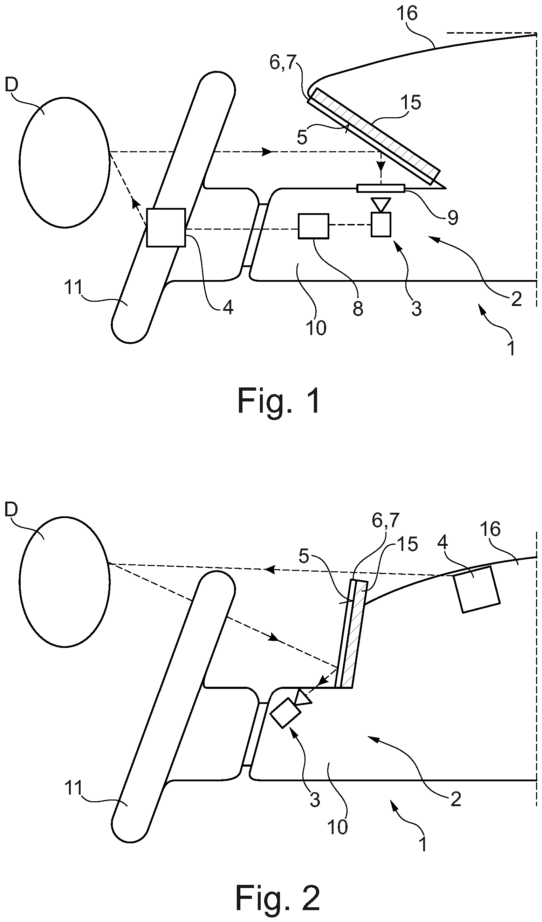

Figure 1 to Figure 4 show different embodiments of a driver monitoring system 2 according to the invention, which is integrated into a vehicle 1. Figure 1 to Figure 4 each shows a longitudinal section of an exemplary vehicle 1 cockpit.

The driver monitoring system 2 comprises an infrared camera 3 configured to capture infrared light, an infrared illumination unit 4 configured to illuminate a driver D, in particular a driver's face, and a surface 5 positioned in a light path between the camera 3 and the driver D. The surface 5, which reflects infrared light, is positioned at a predetermined angle relative to the driver D to optimize the reflection of the driver's image toward the camera 3. This arrangement ensures that the camera 3 can capture a high-contrast image of the driver D, even under varying lighting conditions within the vehicle.

According to Figure 1 the surface 5 is a front surface of a display 15 of the vehicle 1 arranged in an angle such that the surface 5 acts as a mirror for the camera 3. Display 15 is integrated in a dashboard 16. The surface 5 of the display 15 comprises a coating 6 with at least one layer 7, wherein said layer 7 is at least reflective in the infrared spectrum. Layer 7 can be an anti-reflection-layer. The surface 5 is oriented such that the infrared light is reflected downwards onto the camera 3, which is oriented vertically upwards. This positioning allows the camera 3 to be installed in a concealed manner while still capturing an unobstructed reflection of the driver's face. The camera 3 and the infrared illumination unit 4 are connected to an evaluation unit 8 in a signal transmitting manner, wherein the evaluation unit 8 can receive signals from the camera 3 and evaluate this data with regard to the driver's state of attention. The evaluation unit 8 is only shown as an example and highly schematic in Figure 1.

The infrared illumination unit 4 emits infrared light that is reflected from the driver's face back to the surface 5. The camera 3 captures the driver's face via the reflection of infrared light from the surface 5, ensuring reliable face detection. In this embodiment, the surface 5 is part of a display 15, which is coated with the infrared-reflective layer 7. The camera 3 and the infrared illumination unit 4 are arranged each and at a spatial distance from each other within a housing 10 of a steering wheel 11, wherein the camera 3 is covered by a cover 9 that allows at least infrared light to pass through. In this embodiment the camera 3 is also protected from at least indirect exposure to sunlight. This configuration further ensures that the infrared illumination does not create unwanted glare or reflections on other surfaces within the vehicle, thereby improving the accuracy of the monitoring system 2.

In Figure 2, an alternative embodiment of the driver monitoring system 2 is shown. The camera 3 is integrated into the housing 10 of the steering wheel 11, while the surface 5 is again part of a display 15 coated with the infrared-reflective layer 7. The layer 7 can be an anti-reflection-layer. The infrared illumination unit 4 is positioned separately within the dashboard 16, ensuring flexible integration into the cockpit design. This placement of the camera 3 and the infrared illumination unit 4 ensures that the camera 3 and the infrared illumination unit 4 remain outside the driver's direct line of sight. By positioning the camera 3 in the steering wheel housing 10, the system 2 takes advantage of a stable and vibration-free mounting location, which helps maintain image clarity even when the vehicle is in motion.

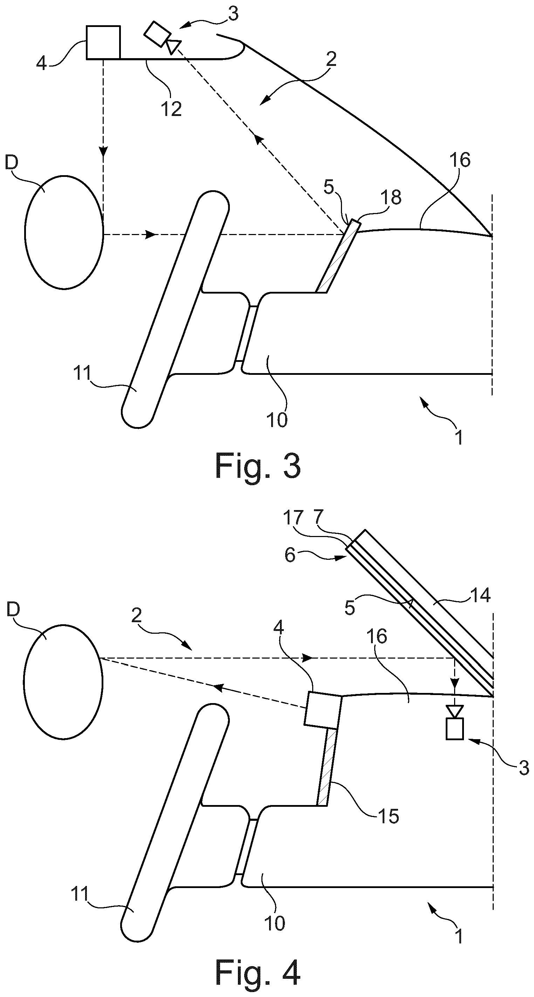

Figure 3 illustrates a third embodiment in which the camera 3 and the infrared illumination unit 4 are arranged in the roof lining 12 of the vehicle 1. The infrared illumination unit 4 is placed independently from the camera 3. This configuration further enhances the ability to hide the camera 3 and the infrared illumination unit 4 while maintaining effective driver monitoring functionality. In this embodiment a separate component 18 is arranged at the dashboard, the component 18 at least being reflective in the infrared spectrum. This is to illustrate that display, in particular the surface of the display, does not necessarily have to be used to reflect the infrared light. Other parts and/or components within the vehicle 1 can be used to reflect the infrared light of the illuminated driver D to the camera 3, provided that this part or component is at least reflective in the infrared spectrum. Alternatively, a surface of a part or component can be coated with a coating with at least one layer, that is at least reflective in the infrared spectrum, analogous to Figure 1 and Figure 2. In this embodiment, the camera 3 is well protected from sunlight. Additionally, this configuration allows for more design flexibility, as the reflective component 18 can be strategically placed to optimize the reflection path for the camera 3, even in different vehicle interiors.

In Figure 4, a fourth embodiment is depicted, where the camera 3 is integrated in the dashboard 16 and aligned vertically upwards in the direction of a windshield 14 of the vehicle 1. As in Figure 1 and Figure 2, a surface 5 on the inside of the windshield 14 is coated with a coating 6 comprising two layers, namely a first layer 7 in the form of an anti-reflection layer and a second layer 17 in the form of an anti-glare layer. In this embodiment example, the infrared illumination unit 4 is arranged in the area of the display. By integrating the infrared-reflective surface 5 into the windshield 14, the system minimizes the number of additional components required for implementation, thereby reducing manufacturing costs and simplifying assembly.

In all embodiments, the surface 5 acts as an infrared mirror for the camera 3, allowing driver D face detection without requiring a direct line of sight between the camera and the driver D. By using an infrared-reflective surface 5 and/or an infrared-reflective layer 7 of a coating 6, which may also be non-reflective in the visible spectrum for the human eye, the system 2 ensures that the reflection does not interfere with the driver's visibility. The flexible placement of the camera 3 and the infrared illumination unit 4 enables the use of standard display panels such as LCD or OLED while minimizing thermal impact on the display components. Furthermore, the ability to use different surfaces within the vehicle 1 as infrared mirrors increases the adaptability of the system 2, making it suitable for various vehicle designs and interior layouts.

It is understood that the invention is not limited to the exemplary embodiments illustrated and described herein. Rather, further embodiments will be apparent to the person skilled in the art from the overall context of the above explanations. In particular, the embodiments described herein can be usefully combined.

### Reference symbols

- 1: Vehicle
- 2: Driver monitoring system
- 3: Camera
- 4: Infrared illumination unit
- 5: Surface
- 6: Coating
- 7: Layer
- 8: Evaluation unit
- 9: Cover
- 10: Housing
- 11: Steering wheel
- 12: Roof lining
- 14: Windshield
- 15: Display
- 16: Dashboard
- 17: Layer
- 18: Component

- D: Driver

## Claims

1. Driver monitoring system (2) for a vehicle (1), comprising:
- a camera (3) configured to capture infrared light,
- an infrared illumination unit (4) configured to illuminate a driver, in particular a driver's face, with infrared light, and
- a surface (5) positioned in a light path between the camera (3) and the driver (D), wherein the surface (5)
a) is at least reflective in the infrared spectrum, or
b) comprises a coating (6) with at least one layer (7) that is at least reflective in the infrared spectrum,
wherein the surface (5) is arranged so that the infrared light generated by the infrared illumination unit (4) is reflected from the driver's face to the camera (3) so that the camera (3) captures the driver's face.

2. Driver monitoring system (2) according to claim 1, **characterized in that** the at least one layer (7) is non-reflective in the visible spectrum for the human eye.

3. Driver monitoring system (2) according to claim 1 or claim 2, **characterized in that** the infrared illumination unit (4) is arranged at a spatial distance from the camera (3).

4. Driver monitoring system (2) according to any of the preceding claims, **characterized in that** the camera (3) is connected to an evaluation unit (8).

5. Driver monitoring system (2) according to any of the preceding claims, **characterized in that** the coating (6) comprises at least one anti-reflection-layer.

6. Driver monitoring system (2) according to any of the preceding claims, **characterized in that** the coating (6) comprises at least one anti-glare-layer.

7. Driver monitoring system (2) according to any of the preceding claims, **characterized in that** the camera (3) is covered by a cover (9) that allows at least infrared light to pass through.

8. A vehicle (1), comprising the driver monitoring system (2) of any of the preceding claims.

9. Vehicle (1) according to claim 8, **characterized in that** the camera (3) is positioned outside a driver's line of sight during vehicle use.

10. Vehicle (1) according to claim 8 or claim 9, **characterized in that** the camera (3) is arranged within a housing (10) of a steering wheel (11).

11. Vehicle (1) according to claim 8 or claim 9, **characterized in that** the camera (3) is positioned in the vehicle's (1) roof lining (12).

12. Vehicle (1) according to any of the claims 8 to 11, further comprising a display (15), wherein a front surface (5) of the display (15) is coated with said at least one layer (7).

13. Vehicle (1) according to any of the claims 8 to 11, **characterized in that** a surface (5) of the windshield (14) is coated with said at least one layer (7).

14. Vehicle (1) according to any of the claims 8 to 13, **characterized in that** the infrared illumination unit (4) is integrated into the housing (10) of the steering wheel (11) or a dashboard (16).

15. Vehicle (1) according to any of the claims 8 to 14, **characterized in that** the windscreen (14) has means for protecting the camera (3) from at least indirect exposure to sunlight.
